# EUROPEAN PATENT APPLICATION

(11) **EP 4 113 797 A1**
(43) Date of publication of application: **04.01.2023**
(21) Application number: 20922245.4
(22) Date of filing: 26.02.2020
(51) Int. Cl.: H02K 1/32, H02K 9/06

(54) **ROTARY MOTOR AND ROTOR ASSEMBLY THEREOF**

(71) Applicant: Adata Technology Co., Ltd., Taiwan 235 (TW)
(72) Inventor: LIN, Chi-chien, Keelung City, Taiwan 202 (CN); HSIAO, Chia-hsiang, New Taipei City, Taiwan 236 (CN); YEN, Po-chun, Taipei City, Taiwan 116 (CN)
(74) Representative: Viering, Jentschura & Partner mbB Patent- und Rechtsanwälte
(86) International application number: PCT/CN2020/076739
(87) International publication number: WO 2021/168680

(57) **Abstract**

Disclosed are a rotary motor (U) and a rotor assembly (RA) thereof. The rotary motor (U) comprises a stator (6) assembly (SA) and a rotor assembly (RA). The rotor assembly (RA) is arranged corresponding to the stator (6) assembly (SA). The rotor assembly (RA) comprises a rotor body (2), a first end cover (3), and a second end cover (4). The rotor body (2) comprises a plurality of flow guide through holes (20) penetrating along the axial direction of the rotor body (2). The first end cover (3) corresponds to one end of the rotor body (2). The first end cover (3) comprises a first cover body (31) and a plurality of first flow guide structures (32) disposed on the first cover body (31). The second end cover (4) corresponds to the other end of the rotor body (2). The second end cover (4) comprises a second cover body (41) and a plurality of second flow guide structures (42) disposed on the second cover body (41). When the rotor assembly (RA) rotates along a rotation direction, the first flow guide structures (32) and/or the second flow guide structures (42) can guide an airflow to flow in the plurality of flow guide through holes (20). Thus, the present invention achieves the effect of improving the heat dissipation efficiency of the rotary motor (U).

## Description

### FIELD OF THE DISCLOSURE

The present disclosure relates to a motor and a rotor thereof, and more particularly to a rotary motor and a rotor assembly thereof for improving a heat-dissipating efficiency.

### BACKGROUND OF THE DISCLOSURE

Following the high-speed trend in an electric motor of an electric vehicle, the heat dissipation method of a rotor of the electric motor in the related art has been unable to meet the requirements of vehicle electric motors. When the temperature of the electric motor is too high, it will not only affect the overall efficiency but also reduce the life of the electric motor.

### SUMMARY OF THE DISCLOSURE

In response to the above-referenced technical inadequacy, the present disclosure provides a rotary motor and a rotor assembly thereof.

In one aspect, the present disclosure provides a rotary motor, which includes a stator assembly and a rotor assembly correspondingly disposed on the stator assembly, and the rotor assembly includes a rotor body, a first end cover, and a second end cover. The rotor body has a plurality of airflow-guiding through holes passing through the rotor body along an axial direction of the rotor body. The first end cover corresponds to an end of the rotor body, and the first end cover includes a first cover body, and a plurality of first airflow-guiding structures disposed on the first cover body. The second end cover corresponds to another end of the rotor body, and the second end cover includes a second cover body, and a plurality of second airflow-guiding structures disposed on the second cover body. When the rotor assembly is rotated along a rotating direction, the first airflow-guiding structures or the second airflow-guiding structures are configured for guiding airflows in the airflow-guiding through holes.

In certain embodiments, each of the first airflow-guiding structure and the second airflow-guiding structure is shaped as a plate-shaped body, each of the first airflow-guiding structure and the second airflow-guiding structure has a length along a length direction, a width along a width direction, and a thickness along a thickness direction, the length and the thickness of the first airflow-guiding structure and the length and the thickness of the second airflow-guiding structure are perpendicular to an extending direction of a central axis, and the width of the first airflow-guiding structure and the width of the second airflow-guiding structure are horizontal to the extending direction of the central axis.

In certain embodiments, each of the first airflow-guiding structure and the second airflow-guiding structure is a casing, the first end cover further includes a plurality of first openings passing through the first cover body, and the second end cover further includes a plurality of second openings passing through the second cover body. A third opening is formed between the first airflow-guiding structure and the first cover body, and a fourth opening is formed between the second airflow-guiding structure and the second cover body. The first opening and the third opening are communicated with each other, and the second opening and the fourth opening are communicated with each other. The third opening has an opening direction the same as or different from the rotating direction, and the fourth opening has an opening direction the same as or different from the rotating direction.

In certain embodiments, a perpendicular projection of the first airflow-guiding structure on the first cover body partially overlaps with the first opening, and a perpendicular projection of the second airflow-guiding structure on the second cover body partially overlaps with the second opening.

In certain embodiments, the first end cover further includes a first surrounding lateral wall connected to the first cover body, and a first air-gathering space is formed between the first cover body, the first surrounding lateral wall and a first end portion of the rotor body. The second end cover further includes a second surrounding lateral wall connected to the second cover body, and a second air-gathering space is formed between the second cover body, the second surrounding lateral wall and a second end portion of the rotor body.

In another aspect, the present disclosure provides a rotor assembly, which includes a rotor body, a first end cover, and a second end cover. The rotor body is disposed on a rotating shaft, and the rotor body has a plurality of airflow-guiding through holes passing through the rotor body along an axial direction of the rotor body. The first end cover corresponds to an end of the rotor body, and the first end cover includes a first cover body, and a plurality of first airflow-guiding structures disposed on the first cover body. The second end cover corresponds to another end of the rotor body, and the second end cover includes a second cover body, and a plurality of second airflow-guiding structures disposed on the second cover body. When the rotor assembly is rotated along a rotating direction, the first airflow-guiding structures or the second airflow-guiding structures are configured for guiding airflows in the airflow-guiding through holes.

In certain embodiments, each of the first airflow-guiding structure and the second airflow-guiding structure is shaped as a plate-shaped body, each of the first airflow-guiding structure and the second airflow-guiding structure has a length along a length direction, a width along a width direction, and a thickness along a thickness direction, the length and the thickness of the first airflow-guiding structure and the length and the thickness of the second airflow-guiding structure are perpendicular to an extending direction of a central axis, and the width of the first airflow-guiding structure and the width of the second airflow-guiding structure are horizontal to the extending direction of the central axis.

In certain embodiments, each of the first airflow-guiding structure and the second airflow-guiding structure is a casing, the first end cover further includes a plurality of first openings passing through the first cover body, and the second end cover further includes a plurality of second openings passing through the second cover body. A third opening is formed between the first airflow-guiding structure and the first cover body, and a fourth opening is formed between the second airflow-guiding structure and the second cover body. The first opening and the third opening are communicated with each other, and the second opening and the fourth opening are communicated with each other. The third opening has an opening direction the same as or different from the rotating direction, and the fourth opening has an opening direction the same as or different from the rotating direction.

In certain embodiments, a perpendicular projection of the first airflow-guiding structure on the first cover body partially overlaps with the first opening, and a perpendicular projection of the second airflow-guiding structure on the second cover body partially overlaps with the second opening.

In yet another aspect, the present disclosure provides a rotor assembly, which includes a rotating shaft, a rotor body, a first end cover, and a second end cover. The rotating shaft has a central axis. The rotor body is disposed on the rotating shaft. The rotor body has a main portion, a first end portion connected to an end of the main portion, a second end portion connected to another end of the main portion, and a plurality of airflow-guiding through holes passing through the first end portion, the main portion and the second end portion along an axial direction of the rotor body. The first end cover is disposed on the rotating shaft and corresponds to the first end portion. The first end cover includes a first cover body, a plurality of first airflow-guiding structures disposed on the first cover body, and a plurality of first openings passing through the first cover body, and the first airflow-guiding structures respectively correspond to the first openings. The second end cover is disposed on the rotating shaft and corresponds to the second end portion. The second end cover includes a second cover body, a plurality of second airflow-guiding structures disposed on the second cover body, and a plurality of second openings passing through the second cover body, and the second airflow-guiding structures respectively correspond to the second openings. The first openings are respectively communicated with the second openings by the airflow-guiding through holes so as to form a plurality of gas channels.

Therefore, in the rotary motor and the rotor assembly provided by the present disclosure, when the rotor assembly is rotated along a rotating direction, the first airflow-guiding structures and/or the second airflow-guiding structures can be configured to guide airflows in the airflow-guiding through holes, so that the heat-dissipating efficiency of the rotor assembly of the rotary motor can be improved.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The described embodiments may be better understood by reference to the following description and the accompanying drawings, in which:
FIG. 1 is a schematic perspective assembled view of a rotary motor according to the present disclosure;
FIG. 2 is a schematic perspective assembled view of a rotor assembly according to a first embodiment of the present disclosure;
FIG. 3 is another schematic perspective assembled view of the rotor assembly according to the first embodiment of the present disclosure;
FIG. 4 is a schematic perspective exploded view of the rotor assembly according to the first embodiment of the present disclosure;
FIG. 5 is another schematic perspective exploded view of the rotor assembly according to the first embodiment of the present disclosure;
FIG. 6 is a schematic perspective cross-sectional view taken along line VI-VI of FIG. 2;
FIG. 7 is another schematic perspective cross-sectional view taken along line VI-VI of FIG. 2;
FIG. 8 is a schematic perspective assembled view of the rotor assembly according to a second embodiment of the present disclosure;
FIG. 9 is a schematic perspective exploded view of the rotor assembly according to the second embodiment of the present disclosure;
FIG. 10 is another schematic perspective exploded view of the rotor assembly according to the second embodiment of the present disclosure;
FIG. 11 is a schematic perspective exploded view of the rotor assembly according to a third embodiment of the present disclosure;
FIG. 12 is another schematic perspective exploded view of the rotor assembly according to the third embodiment of the present disclosure;
FIG. 13 is a schematic perspective assembled view of the rotor assembly according to a fourth embodiment of the present disclosure;
FIG. 14 is a schematic perspective exploded view of the rotor assembly according to the fourth embodiment of the present disclosure; and
FIG. 15 is another schematic perspective exploded view of the rotor assembly according to the fourth embodiment of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

### [First Embodiment]

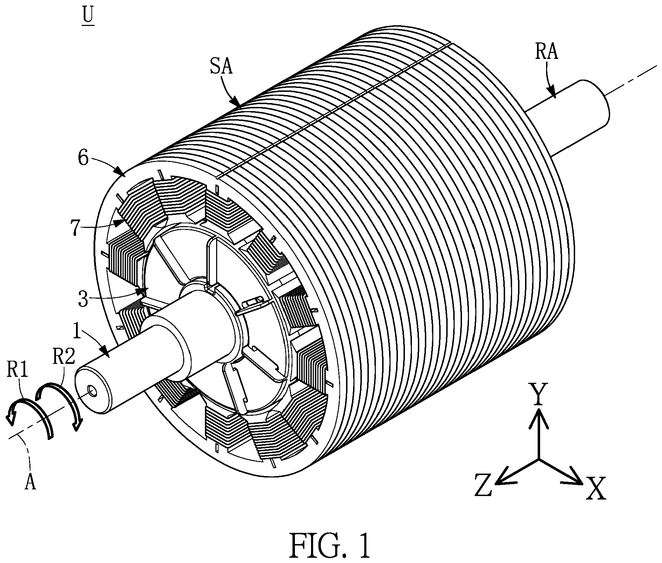

Referring to FIG. 1, FIG. 1 shows a schematic perspective assembled view of a rotary motor according to the present disclosure. The present disclosure provides a rotary motor U and a rotor assembly RA thereof, and the rotor assembly RA can be applied to the rotary motor U (i.e., an electric motor and a rotor applied to the electric motor). The rotary motor U includes a rotor assembly RA and a stator assembly SA, and the rotor assembly RA is correspondingly disposed on the stator assembly SA. The rotor assembly RA can be rotated relative to the stator assembly SA, and a rotating shaft 1 can be synchronously rotated following the rotation of the rotor assembly RA.

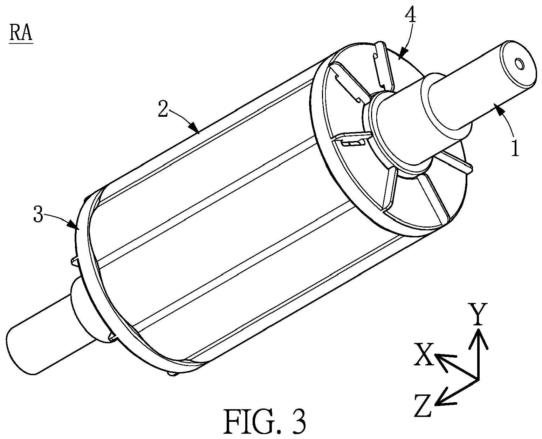

According to the above description, referring to FIG. 1 to FIG. 3, FIG. 2 and FIG. 3 show two schematic perspective assembled views of the rotor assembly according to the first embodiment of the present disclosure, respectively. The rotor assembly RA of the rotary motor U includes a rotating shaft 1, a rotor body 2, a first end cover 3, and a second end cover 4, but it is merely an example (e.g., the rotating shaft 1 is unnecessary), and is not meant to limit the scope of the present disclosure. In addition, the stator assembly SA includes a stator 6 and a plurality of coils 7 disposed on the stator 6.

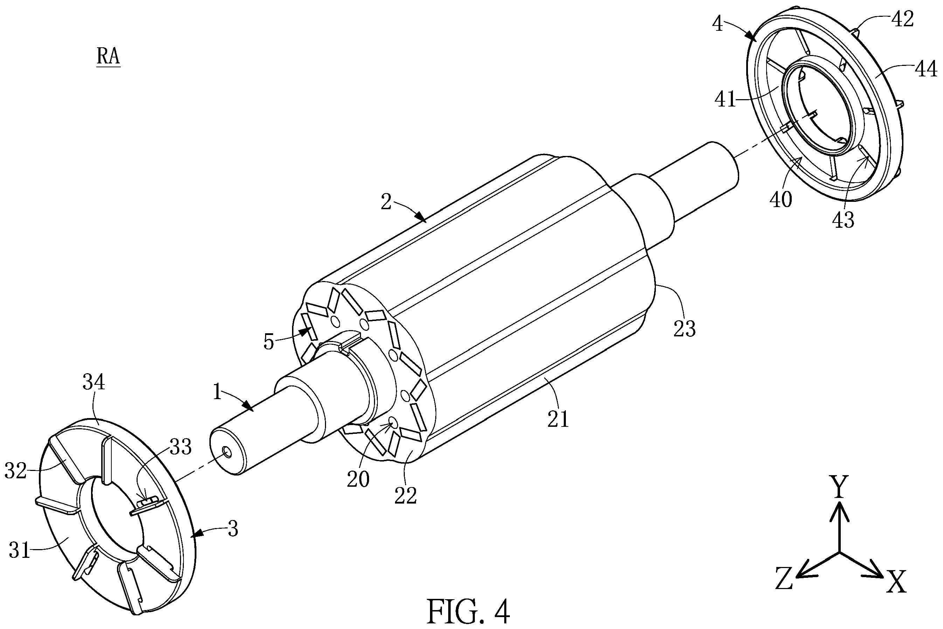

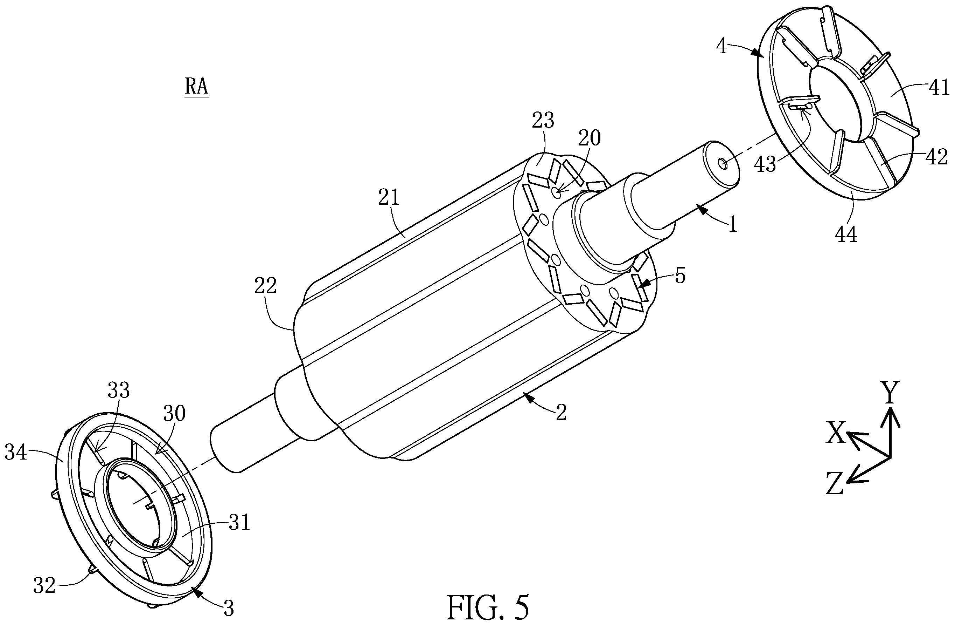

Moreover, referring to FIG. 1 to FIG. 5, FIG. 4 and FIG. 5 show two schematic perspective exploded views of the rotor assembly according to the first embodiment of the present disclosure, respectively. The rotating shaft 1 has a central axis A, and the rotor assembly RA can be rotated along a rotating direction relative to the stator assembly SA. For example, the rotating direction can be a first rotating direction R1 (i.e., a counterclockwise direction) or a second rotating direction R2 (i.e., a clockwise direction), and the first rotating direction R1 and the second rotating direction R2 are two different directions. In addition, the rotor assembly RA further includes a plurality of magnetic components 5 disposed on the rotor body 2, each of the magnetic components 5 is shown as a rectangular shape, and each two of the magnetic components 5 is arranged as a V shape. However, the magnetic components 5 are disclosed for exemplary purposes only, and are not meant to limit the scope of the present disclosure. Furthermore, in the first embodiment, it should be noted that the magnetic components 5 are only shown in FIG. 4 and FIG. 5. That is to say, the magnetic components 5 are omitted in other figures so as to highlight other structural features except for the magnetic components 5.

According to the above description, the rotor body 2 is disposed on the rotating shaft 1, and the rotor body 2 has a main portion 21, a first end portion 22 connected to an end of the main portion 21, a second end portion 23 connected to another end of the main portion 21, and a plurality of airflow-guiding through holes 20 passing through the first end portion 22, the main portion 21 and the second end portion 23 along an axial direction (such as a Z-axis direction) of the rotor body 2. That is to say, the airflow-guiding through holes 20 can pass through the rotor body 2 along the axial direction of the central axis A. Therefore, when airflows pass through airflow-guiding through holes 20, the heat-dissipating efficiency of the rotor assembly RA can be improved.

According to the above description, the first end cover 3 is disposed on the rotating shaft 1 and corresponds to the first end portion 22. In one embodiment, the first end cover 3 can abut against the first end portion 22. In addition, when the rotor assembly RA is rotated, both the rotating shaft 1 and the first end cover 3 that is disposed on the rotating shaft 1 can be synchronously rotated following the rotation of the rotor assembly RA. More particularly, the first end cover 3 includes a first cover body 31, a plurality of first airflow-guiding structures 32 disposed on the first cover body 31, and a plurality of first openings 33 passing through the first cover body 31, and the first airflow-guiding structures 32 respectively correspond to the first openings 33. Moreover, for example, the first openings 33 respectively correspond to the airflow-guiding through holes 20, but it is not meant to limit the scope of the present disclosure. In the present disclosure, the first airflow-guiding structures 32 are respectively adjacent to the first openings 33, and the first openings 33 are respectively communicated with the airflow-guiding through holes 20, so that the airflow can pass through the first opening 33 and the airflow-guiding through hole 20 in sequence. It should be noted that, in another embodiment, the first end cover 3 is directly disposed on the first end portion 22, not disposed on the rotating shaft 1.

According to the above description, the second end cover 4 is disposed on the rotating shaft 1 and corresponds to the second end portion 23. In one embodiment, the second end cover 4 can abut against the second end portion 23. In addition, when the rotor assembly RA is rotated, both the rotating shaft 1 and the second end cover 4 that is disposed on the rotating shaft 1 can be synchronously rotated following the rotation of the rotor assembly RA. More particularly, the second end cover 4 includes a second cover body 41, a plurality of second airflow-guiding structures 42 disposed on the second cover body 41, and a plurality of second openings 43 passing through the second cover body 41, and the second airflow-guiding structures 42 respectively correspond to the second openings 43. Moreover, for example, the second openings 43 respectively correspond to the airflow-guiding through holes 20, but it is not meant to limit the scope of the present disclosure. In the present disclosure, the second airflow-guiding structures 42 are respectively adjacent to the second openings 43, and the second openings 43 are respectively communicated with the airflow-guiding through holes 20, so that the airflow can pass through the second opening 43 and the airflow-guiding through hole 20 in sequence. It should be noted that, in another embodiment, the second end cover 4 is directly disposed on the second end portion 23, not disposed on the rotating shaft 1.

Furthermore, for example, referring to FIG. 4 and FIG. 5, in one embodiment, the airflow-guiding through hole 20 are arranged around the central axis A and separate from each other, the first openings 33 are arranged around the central axis A and separate from each other, and the second openings 43 are arranged around the central axis A and separate from each other. In other words, the first openings 33 can be radially disposed on the first end cover 3 relative to the central axis A, the second openings 43 can be radially disposed on the second end cover 4 relative to the central axis A, and the airflow-guiding through hole 20 can be radially disposed on the rotor body 2 relative to the central axis A. It should be noted that, it is merely an example, and is not meant to limit the scope of the present disclosure. In another embodiment, the first openings 33, the second openings 43, and the airflow-guiding through hole 20 can be arranged as any predetermined shapes according to different requirements.

Therefore, the first openings 33 are respectively communicated with the second openings 43 by the airflow-guiding through holes 20 so as to form a plurality of gas channels. In other words, in the present disclosure, each gas channel can be formed by the corresponding first opening 33, the corresponding second opening 43 and the corresponding airflow-guiding through hole 20. The airflow can flow from the corresponding first opening 33 to the corresponding second opening 43 through the corresponding airflow-guiding through hole 20, or flow from the corresponding second opening 43 to the corresponding first opening 33 through the corresponding airflow-guiding through hole 20. That is to say, when the rotor assembly RA is rotated along the rotating direction relative to the stator assembly SA, the airflow can be guided inside the airflow-guiding through holes 20 through the first airflow-guiding structures 32 and/or the second airflow-guiding structures 42.

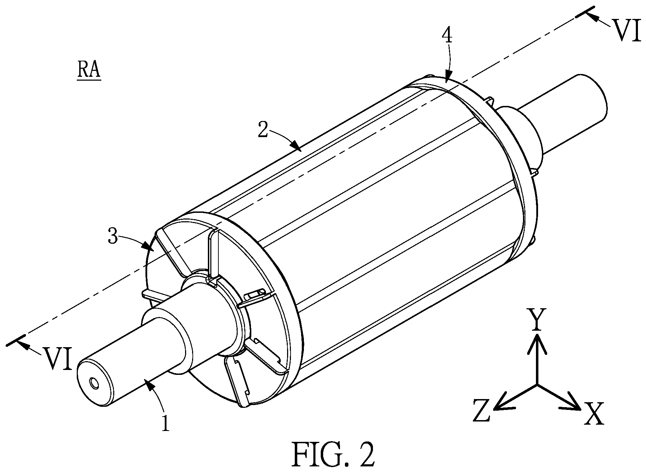

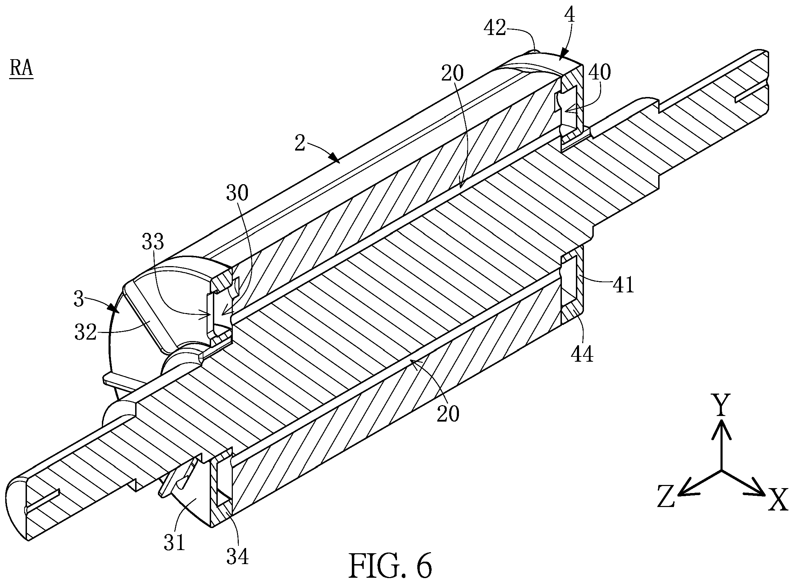

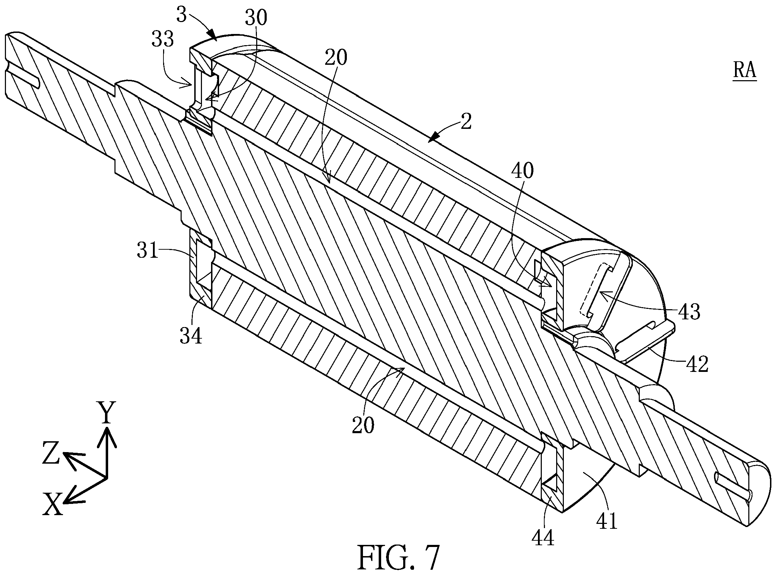

Moreover, referring to FIG. 1 to FIG. 7, FIG. 6 and FIG. 7 show two schematic perspective cross-sectional views taken along line VI-VI of FIG. 2, respectively. When the rotor assembly RA is rotated along the first rotating direction R1, the first airflow-guiding structures 32 can be configured to guide a first airflow into the first opening 33, and the first airflow can pass through the corresponding airflow-guiding through hole 20 and then be guided into the corresponding second opening 43. In addition, the rotor assembly RA is rotated along the second rotating direction R2, the second airflow-guiding structures 42 can be configured to guide a second airflow into the second opening 43, and the second airflow can pass through the corresponding airflow-guiding through hole 20 and then be guided into the corresponding first opening 33. In other words, the external airflow can be guided into each airflow-guiding through hole 20 from the corresponding first opening 33 to the corresponding second opening 43 (or from the corresponding second opening 43 to the corresponding first opening 33) through the corresponding first airflow-guiding structure 32 (or the corresponding second airflow-guiding structures 42) so as to gather and discharge the external airflow.

According to the above description, in the first embodiment of the present disclosure, the first end cover 3 further includes a first surrounding lateral wall 34 connected to the first cover body 31, and a first air-gathering space 30 (or a first air-receiving space) is formed between the first cover body 31, the first surrounding lateral wall 34 and the first end portion 22 of the rotor body 2. The second end cover 4 further includes a second surrounding lateral wall 44 connected to the second cover body 41, and a second air-gathering space 40 (or a second air-receiving space) is formed between the second cover body 41, the second surrounding lateral wall 44 and the second end portion 23 of the rotor body 2. In addition, in one embodiment, the first surrounding lateral wall 34 of the first end cover 3 can abut against the first end portion 22 of the rotor body 2 so as to form the first air-gathering space 30, and the second surrounding lateral wall 44 of the second end cover 4 can abut against the second end portion 23 of the rotor body 2 so as to form the second air-gathering space 40. For example, when the first air-gathering space 30 and the second air-gathering space 40 are formed on the rotor body 2, each first opening 33 does not need to correspond to the corresponding airflow-guiding through hole 20, each second opening 43 does not need to correspond to the corresponding airflow-guiding through hole 20, and the external airflow can be guided into the airflow-guiding through holes 20 through the first air-gathering space 30 and the second air-gathering space 40.

Therefore, in the first embodiment, when the rotor assembly RA is rotated along the first rotating direction R1, the first airflow-guiding structures 32 can be configured to guide a first airflow into the first air-gathering space 30 through the first openings 33 so as to gather the first airflow, and the first airflow can pass through the airflow-guiding through holes 20 and then be guided into the second air-gathering space 40 so as to discharge the first airflow from the second openings 43, so that the heat-dissipating efficiency of the rotor assembly RA can be improved. In addition, when the rotor assembly RA is rotated along the second rotating direction R2, the second airflow-guiding structures 42 can be configured to guide a second airflow into the second air-gathering space 40 through the second openings 43 so as to gather the second airflow, and the second airflow can pass through the airflow-guiding through holes 20 and then be guided into the first air-gathering space 30 so as to discharge the second airflow from the first openings 33, so that the heat-dissipating efficiency of the rotor assembly RA can be improved.

More particularly, in the first embodiment of the present disclosure, each of the first airflow-guiding structure 32 and the second airflow-guiding structure 42 is shaped as a plate-shaped body. Each of the first airflow-guiding structure 32 and the second airflow-guiding structure 42 has a length along a length direction, a width along a width direction, and a thickness along a thickness direction, the length and the thickness of the first airflow-guiding structure 32 and the length and the thickness of the second airflow-guiding structure 42 are perpendicular to an extending direction of the central axis A, and the width of the first airflow-guiding structure 32 and the width of the second airflow-guiding structure 42 are horizontal to the extending direction of the central axis A. Furthermore, in the first embodiment of the present disclosure, a perpendicular projection of the first airflow-guiding structure 32 on the first cover body 31 does not overlap with the first opening 33, and a perpendicular projection of the second airflow-guiding structure 42 on the second cover body 41 does not overlap with the second opening 43, but it is not meant to limit the scope of the present disclosure.

According to the above description, it should be noted that, in another embodiment, the width of the first airflow-guiding structure 32 and the width of the second airflow-guiding structure 42 can be inclined to the extending direction of the central axis A, so that the first airflow-guiding structure 32 and the second airflow-guiding structure 42 can be inclinedly disposed on the first cover body 31 and the second cover body 41, respectively. In other words, the first plate-shaped airflow-guiding structure 32 and the second plate-shaped airflow-guiding structure 42 are inclined relative to the first cover body 31 and the second cover body 41, respectively. Therefore, the perpendicular projection of the first airflow-guiding structure 32 on the first cover body 31 can partially overlap with the first opening 33, and the perpendicular projection of the second airflow-guiding structure 42 on the second cover body 41 can partially overlap with the second opening 43.

### [Second Embodiment]

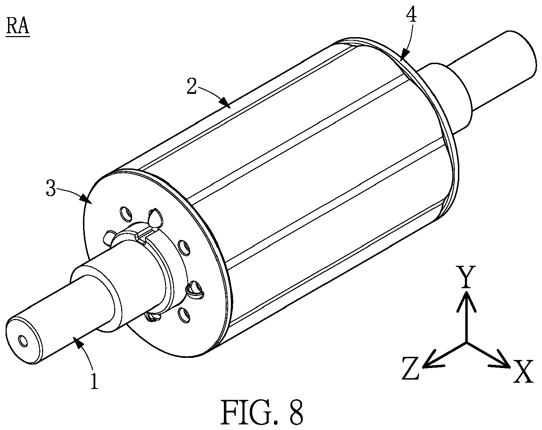

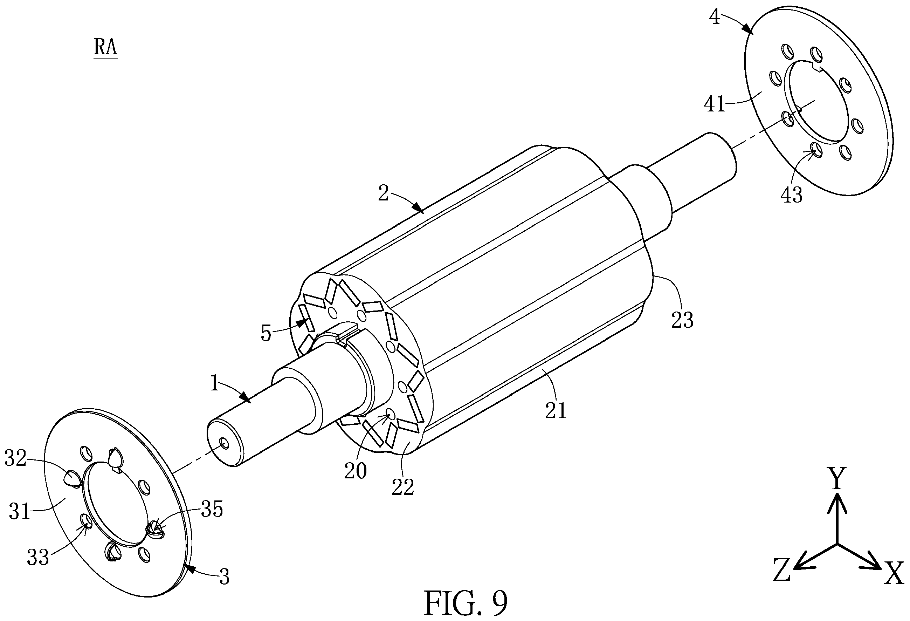

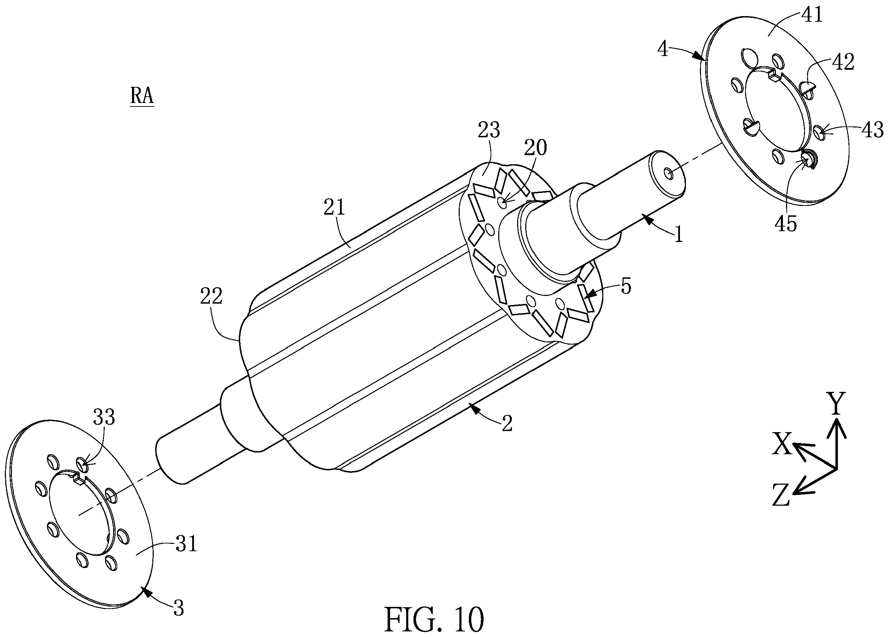

Referring to FIG. 8 to FIG. 10, FIG. 8 shows a schematic perspective assembled view of the rotor assembly according to a second embodiment of the present disclosure, and FIG. 9 and FIG. 10 show two schematic perspective exploded views of the rotor assembly according to the second embodiment of the present disclosure, respectively. The second embodiment of the present disclosure provides a rotary motor U and a rotor assembly RA thereof. Comparing FIG. 9 with FIG. 4, and comparing FIG. 10 with FIG. 5, the main difference between the second embodiment and the first embodiment is as follows: the structural features of the first end cover 3 and the second end cover 4 in the second embodiment are different from the structural features of the first end cover 3 and the second end cover 4 in the first embodiment. It should be noted that the main structure of the rotary motor U of the second embodiment is similar to the main structure of the rotary motor U of the first embodiment.

According to the above description, in the second embodiment, each of the first airflow-guiding structure 32 and the second airflow-guiding structure 42 is a casing, a third opening 35 is formed between the first airflow-guiding structure 32 and the first cover body 31, and a fourth opening 45 is formed between the second airflow-guiding structure 42 and the second cover body 41. In other words, the first opening 33 and the second opening 43 respectively pass through the first cover body 31 and the second cover body 41, the third opening 35 passes through the first cover body 31 and is formed between the first airflow-guiding structure 32 and the first cover body 31, and the fourth opening 45 passes through the second cover body 41 and is formed between the second airflow-guiding structure 42 and the second cover body 41. It should be noted that, for example, each of the first airflow-guiding structure 32 and the second airflow-guiding structure 42 is an arc-shaped casing, but it is not meant to limit the scope of the present disclosure. The perpendicular projection of the first airflow-guiding structure 32 on the first cover body 31 can partially overlap with the first opening 33, and the perpendicular projection of the second airflow-guiding structure 42 on the second cover body 41 can partially overlap with the second opening 43.

According to the above description, the third opening 35 is formed on one side of the first arc-shaped airflow-guiding structure 32 and adjacent to the first opening 33, and the fourth opening 45 is formed on one side of the second arc-shaped airflow-guiding structure 42 and adjacent to the second opening 43. The first opening 33 and the third opening 35 are communicated with each other, and the second opening 43 and the fourth opening 45 are communicated with each other. In addition, for example, the rotor assembly RA can be rotated along a rotating direction (such as a first rotating direction R1 or a second rotating direction R2), the third opening 35 has an opening direction the same as or different from the rotating direction, and the fourth opening 45 has an opening direction the same as or different from the rotating direction.

Furthermore, in the second embodiment, the first airflow-guiding structures 32 are separate from each other, and each third opening 35 is communicated with one of the two adjacent first openings 33 and disposed on a corresponding one of the first airflow-guiding structures 32, and the first airflow-guiding structure 32 with the third opening 35 is not disposed on another one of the two adjacent first openings 33. In addition, the second airflow-guiding structures 42 are separate from each other, and each fourth opening 45 is communicated with one of the two adjacent second openings 43 and disposed on corresponding one of the second airflow-guiding structures 42, and the second airflow-guiding structure 42 with the fourth opening 45 is not disposed on another one of the two adjacent second openings 43. More particularly, in the second embodiment, the opening directions of the two adjacent third openings 35 are the same, and the opening directions of the two adjacent fourth openings 45 are the same, but it is not meant to limit the scope of the present disclosure.

According to the above description, in the second embodiment, each of the airflow-guiding through holes 20 has two opposite sides, one side of the airflow-guiding through hole 20 is communicated with a corresponding one of first openings 33 with the first airflow-guiding structure 32, and another side of the airflow-guiding through hole 20 is communicated with a corresponding one of second openings 43 without the second airflow-guiding structure 42. In addition, one side of the airflow-guiding through hole 20 is communicated with a corresponding one of first openings 33 without the first airflow-guiding structure 32, and another side of the airflow-guiding through hole 20 is communicated with a corresponding one of second openings 43 with the second airflow-guiding structure 42.

Therefore, in the second embodiment, when the rotor assembly RA is rotated along a rotating direction (such as the first rotating direction R1), the first airflow-guiding structure 32 can be configured to guide a first airflow into the corresponding third opening 35 and the corresponding first openings 33 in sequence, and the first airflow can pass through the corresponding airflow-guiding through hole 20 and then be discharged from the corresponding second opening 43, so that the heat-dissipating efficiency of the rotor assembly RA can be improved. In addition, when the rotor assembly RA is rotated along a rotating direction (such as the first rotating direction R1), the second airflow-guiding structure 42 can be configured to guide a second airflow into the corresponding fourth opening 45 and the corresponding second opening 43 in sequence, and the second airflow can pass through the corresponding airflow-guiding through hole 20 and then be discharged from the corresponding first opening 33, so that the heat-dissipating efficiency of the rotor assembly RA can be improved.

### [Third Embodiment]

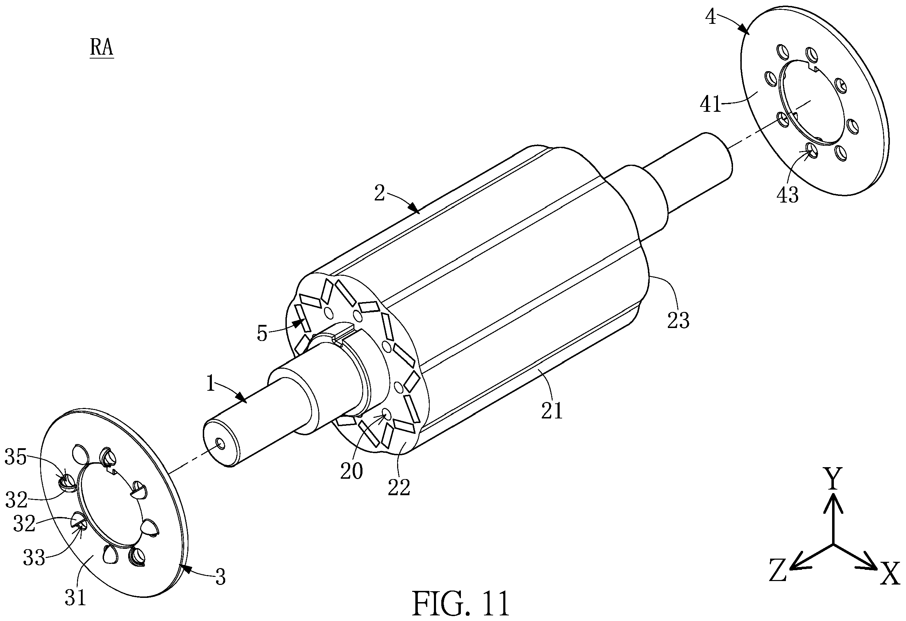

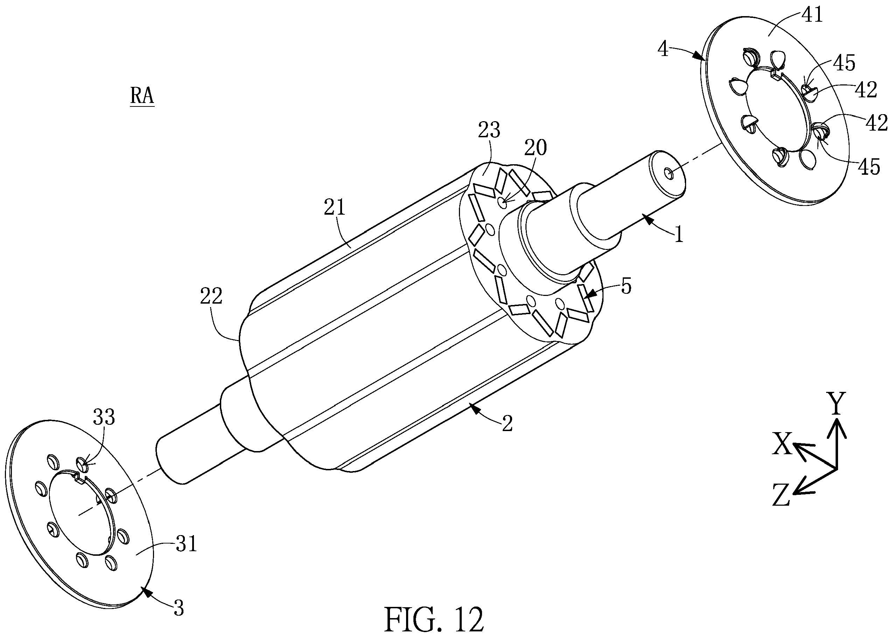

Referring to FIG. 11 and FIG. 12, FIG. 11 and FIG. 12 show two schematic perspective exploded views of the rotor assembly according to a third embodiment of the present disclosure, respectively. The third embodiment of the present disclosure provides a rotary motor U and a rotor assembly RA thereof. Comparing FIG. 11 with FIG. 9, and comparing FIG. 12 with FIG. 10, the main difference between the third embodiment and the second embodiment is as follows: the structural features of the first end cover 3 and the second end cover 4 in the third embodiment are different from the structural features of the first end cover 3 and the second end cover 4 in the second embodiment. It should be noted that the main structure of the rotary motor U of the third embodiment is similar to the main structure of the rotary motor U of the second embodiment.

According to the above description, in the third embodiment, each of the first airflow-guiding structure 32 and the second airflow-guiding structure 42 is a casing, a third opening 35 is formed between the first airflow-guiding structure 32 and the first cover body 31, and a fourth opening 45 is formed between the second airflow-guiding structure 42 and the second cover body 41. In other words, the first opening 33 and the second opening 43 respectively pass through the first cover body 31 and the second cover body 41, the third opening 35 passes through the first cover body 31 and is formed between the first airflow-guiding structure 32 and the first cover body 31, and the fourth opening 45 passes through the second cover body 41 and is formed between the second airflow-guiding structure 42 and the second cover body 41. It should be noted that, for example, each of the first airflow-guiding structure 32 and the second airflow-guiding structure 42 is an arc-shaped casing, but it is not meant to limit the scope of the present disclosure. The perpendicular projection of the first airflow-guiding structure 32 on the first cover body 31 can partially overlap with the first opening 33, and the perpendicular projection of the second airflow-guiding structure 42 on the second cover body 41 can partially overlap with the second opening 43.

Furthermore, in the third embodiment, the third openings 35 are respectively communicated with the first openings 33 and respectively disposed on the first airflow-guiding structures 32, so that each of the first airflow-guiding structures 32 can correspond to a corresponding one of the third openings 35 and a corresponding one of the first openings 33. In addition, the fourth openings 45 are respectively communicated with the second openings 43 and respectively disposed on the second airflow-guiding structures 42, so that each of the second airflow-guiding structures 42 can correspond to a corresponding one of the fourth openings 45 and a corresponding one of the second openings 43. For example, in the third embodiment, the opening directions of two adjacent ones of the first airflow-guiding structures 32 are different from each other, and the opening directions of two adjacent ones of the second airflow-guiding structures 42 are different from each other. That is to say, the opening directions of the two adjacent third openings 35 that respectively correspond to two adjacent ones of the first openings 33 are different from each other, and the opening directions of the two adjacent fourth openings 45 that respectively correspond to two adjacent ones of the second openings 43 are different from each other, but it is not meant to limit the scope of the present disclosure.

According to the above description, in the third embodiment, each of the airflow-guiding through holes 20 has two opposite sides, one side of the airflow-guiding through hole 20 is communicated with a corresponding one of first openings 33 with the first airflow-guiding structure 32, and another side of the airflow-guiding through hole 20 is communicated with a corresponding one of second openings 43 with the second airflow-guiding structure 42. In addition, one side of the airflow-guiding through hole 20 is communicated with a corresponding one of first openings 33 with the first airflow-guiding structure 32, and another side of the airflow-guiding through hole 20 is communicated with a corresponding one of second openings 43 with the second airflow-guiding structure 42. It should be noted that, relative to the two opposite sides of the same airflow-guiding through hole 20, the opening direction of the third opening 35 corresponding to the first airflow-guiding structure 32 and the opening direction of the fourth opening 45 corresponding to the second airflow-guiding structure 42 are different from each other.

Therefore, in the third embodiment, when the rotor assembly RA is rotated along a rotating direction (such as the first rotating direction R1), a part of the first airflow-guiding structures 32 each can be configured to guide a first airflow into the corresponding third opening 35 and the corresponding first openings 33 in sequence, and the first airflow can pass through the corresponding airflow-guiding through hole 20 and then be discharged from the corresponding second opening 43 (or a part of the second airflow-guiding structures 42 each can be configured to guide a second airflow into the corresponding fourth opening 45 and the corresponding second opening 43 in sequence, and the second airflow can pass through the corresponding airflow-guiding through hole 20 and then be discharged from the corresponding first opening 33), so that the heat-dissipating efficiency of the rotor assembly RA can be improved. In addition, when the rotor assembly RA is rotated along a rotating direction (such as the second rotating direction R1), each of another part of the first airflow-guiding structures 32 can be configured to guide a first airflow into the corresponding third opening 35 and the corresponding first openings 33 in sequence, and the first airflow can pass through the corresponding airflow-guiding through hole 20 and then be discharged from the corresponding second opening 43 (or each of another part of the second airflow-guiding structures 42 can be configured to guide a second airflow into the corresponding fourth opening 45 and the corresponding second opening 43 in sequence, and the second airflow can pass through the corresponding airflow-guiding through hole 20 and then be discharged from the corresponding first opening 33), so that the heat-dissipating efficiency of the rotor assembly RA can be improved.

### [Fourth Embodiment]

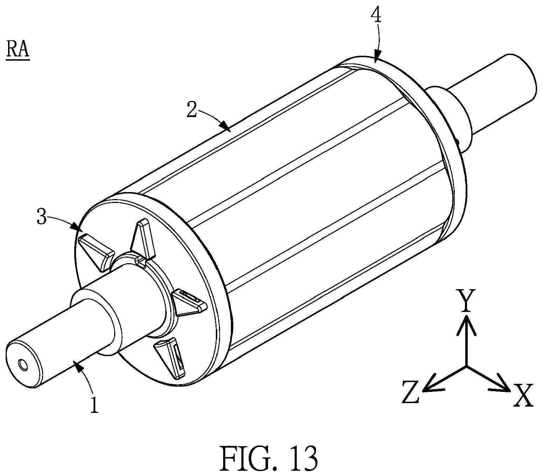

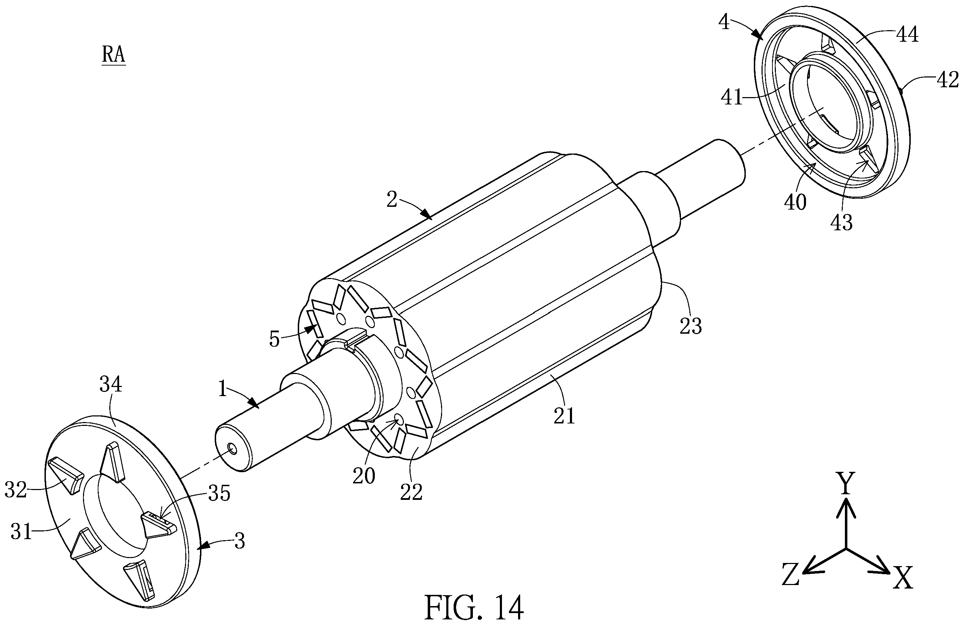

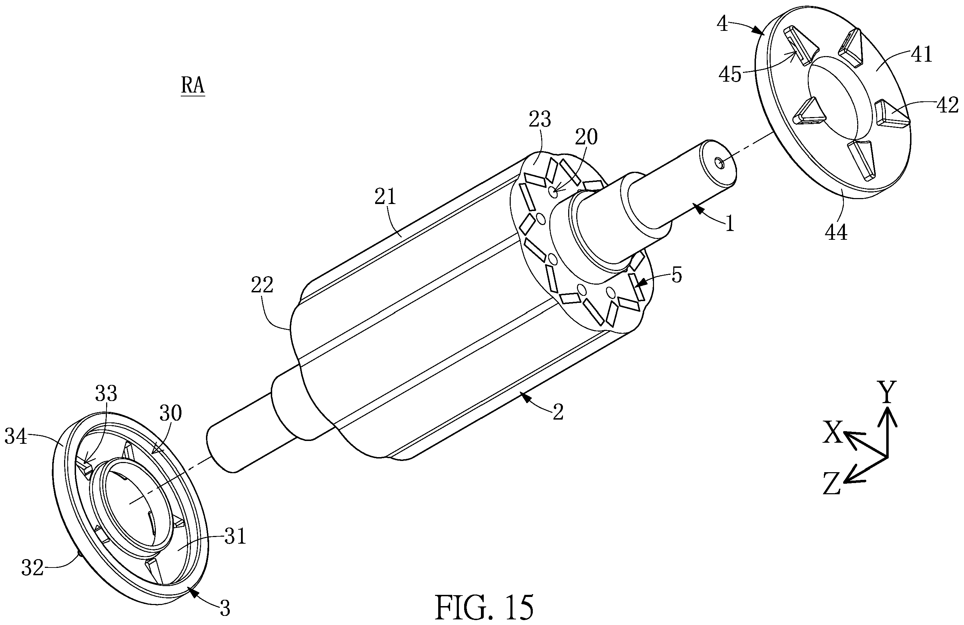

Referring to FIG. 13 to FIG. 15, FIG. 13 shows a schematic perspective assembled view of the rotor assembly according to a fourth embodiment of the present disclosure, and FIG. 14 and FIG. 15 show two schematic perspective exploded views of the rotor assembly according to the fourth embodiment of the present disclosure, respectively. The fourth embodiment of the present disclosure provides a rotary motor U and a rotor assembly RA thereof. Comparing FIG. 14 with FIG. 4, and comparing FIG. 15 with FIG. 5, the main difference between the fourth embodiment and the first embodiment is as follows: the structural features of the first end cover 3 and the second end cover 4 in the fourth embodiment are different from the structural features of the first end cover 3 and the second end cover 4 in the first embodiment. It should be noted that the main structure of the rotary motor U of the fourth embodiment is similar to the main structure of the rotary motor U of the first embodiment.

According to the above description, in the fourth embodiment, each of the first airflow-guiding structure 32 and the second airflow-guiding structure 42 is a polygonal casing. The first airflow-guiding structure 32 has a third opening 35 formed on a side thereof and adjacent to a first opening 33, and the second airflow-guiding structure 42 has a fourth opening 45 formed on a side thereof and adjacent to a second opening 43. More particularly, the opening directions of the two adjacent third openings 35 are the same or different from each other, and the opening directions of the two adjacent fourth openings 45 are the same or different from each other, but it is not meant to limit the scope of the present disclosure.

### [Beneficial Effects of the Embodiments]

In conclusion, in the rotary motor U and the rotor assembly RA provided by the present disclosure, when the rotor assembly RA is rotated along a rotating direction to generate kinetic energy, the first airflow-guiding structures 32 and/or the second airflow-guiding structures 42 can be configured to guide airflows in the airflow-guiding through holes 20, so that the heat-dissipating efficiency of the rotor assembly RA of the rotary motor U can be improved.

More particularly, the first end cover 3 and the second end cover 4 can be disposed on the rotor body 2 so as to prevent the magnetic components 5 from being separated from the rotor body 2.

More particularly, when the first air-gathering space 30 of the first end cover 3 and the second air-gathering space 40 of the second end cover 4 are formed on the rotor body 2, each first opening 33 does not need to correspond to the corresponding airflow-guiding through hole 20, each second opening 43 does not need to correspond to the corresponding airflow-guiding through hole 20, and the external airflow can be guided into the airflow-guiding through holes 20 through the first air-gathering space 30 and the second air-gathering space 40.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A rotary motor (U), **characterized by** comprising:
a stator (6) assembly (SA); and
a rotor assembly (RA) correspondingly disposed on the stator (6) assembly (SA), wherein the rotor assembly (RA) includes a rotor body (2), a first end cover (3), and a second end cover (4);
wherein the rotor body (2) has a plurality of airflow-guiding through holes (20) passing through the rotor body (2) along an axial direction of the rotor body (2);
wherein the first end cover (3) corresponds to an end of the rotor body (2), and the first end cover (3) includes a first cover body (31), and a plurality of first airflow-guiding structures (32) disposed on the first cover body (31);
wherein the second end cover (4) corresponds to another end of the rotor body (2), and the second end cover (4) includes a second cover body (41), and a plurality of second airflow-guiding structures (42) disposed on the second cover body (41);
wherein, when the rotor assembly (RA) is rotated along a rotating direction, the first airflow-guiding structures (32) or the second airflow-guiding structures (42) are configured for guiding airflows in the airflow-guiding through holes (20).

2. The rotary motor (U) according to claim 1, wherein each of the first airflow-guiding structure (32) and the second airflow-guiding structure (42) is shaped as a plate-shaped body, each of the first airflow-guiding structure (32) and the second airflow-guiding structure (42) has a length along a length direction, a width along a width direction, and a thickness along a thickness direction, the length and the thickness of the first airflow-guiding structure (32) and the length and the thickness of the second airflow-guiding structure (42) are perpendicular to an extending direction of a central axis (A), and the width of the first airflow-guiding structure (32) and the width of the second airflow-guiding structure (42) are horizontal to the extending direction of the central axis (A).

3. The rotary motor (U) according to claim 1, wherein each of the first airflow-guiding structure (32) and the second airflow-guiding structure (42) is a casing, the first end cover (3) further includes a plurality of first openings (33) passing through the first cover body (31), and the second end cover (4) further includes a plurality of second openings (43) passing through the second cover body (41); wherein a third opening (35) is formed between the first airflow-guiding structure (32) and the first cover body (31), and a fourth opening (45) is formed between the second airflow-guiding structure (42) and the second cover body (41); wherein the first opening (33) and the third opening (35) are communicated with each other, and the second opening (43) and the fourth opening (45) are communicated with each other; wherein the third opening (35) has an opening direction the same as or different from the rotating direction, and the fourth opening (45) has an opening direction the same as or different from the rotating direction.

4. The rotary motor (U) according to claim 3, wherein a perpendicular projection of the first airflow-guiding structure (32) on the first cover body (31) partially overlaps with the first opening (33), and a perpendicular projection of the second airflow-guiding structure (42) on the second cover body (41) partially overlaps with the second opening (43).

5. The rotary motor (U) according to claim 1, wherein the first end cover (3) further includes a first surrounding lateral wall (34) connected to the first cover body (31), and a first air-gathering space (30) is formed between the first cover body (31), the first surrounding lateral wall (34) and a first end portion (22) of the rotor body (2); wherein the second end cover (4) further includes a second surrounding lateral wall (44) connected to the second cover body (41), and a second air-gathering space (40) is formed between the second cover body (41), the second surrounding lateral wall (44) and a second end portion (23) of the rotor body (2).

6. A rotor assembly (RA), **characterized by** comprising:
a rotor body (2) disposed on a rotating shaft (1), wherein the rotor body (2) has a plurality of airflow-guiding through holes (20) passing through the rotor body (2) along an axial direction of the rotor body (2);
a first end cover (3) corresponding to an end of the rotor body (2), wherein the first end cover (3) includes a first cover body (31), and a plurality of first airflow-guiding structures (32) disposed on the first cover body (31); and
a second end cover (4) corresponding to another end of the rotor body (2), wherein the second end cover (4) includes a second cover body (41), and a plurality of second airflow-guiding structures (42) disposed on the second cover body (41);
wherein, when the rotor assembly (RA) is rotated along a rotating direction, the first airflow-guiding structures (32) or the second airflow-guiding structures (42) are configured for guiding airflows in the airflow-guiding through holes (20).

7. The rotor assembly (RA) according to claim 6, wherein each of the first airflow-guiding structure (32) and the second airflow-guiding structure (42) is shaped as a plate-shaped body, each of the first airflow-guiding structure (32) and the second airflow-guiding structure (42) has a length along a length direction, a width along a width direction, and a thickness along a thickness direction, the length and the thickness of the first airflow-guiding structure (32) and the length and the thickness of the second airflow-guiding structure (42) are perpendicular to an extending direction of a central axis (A), and the width of the first airflow-guiding structure (32) and the width of the second airflow-guiding structure (42) are horizontal to the extending direction of the central axis (A).

8. The rotor assembly (RA) according to claim 6, wherein each of the first airflow-guiding structure (32) and the second airflow-guiding structure (42) is a casing, the first end cover (3) further includes a plurality of first openings (33) passing through the first cover body (31), and the second end cover (4) further includes a plurality of second openings (43) passing through the second cover body (41); wherein a third opening (35) is formed between the first airflow-guiding structure (32) and the first cover body (31), and a fourth opening (45) is formed between the second airflow-guiding structure (42) and the second cover body (41); wherein the first opening (33) and the third opening (35) are communicated with each other, and the second opening (43) and the fourth opening (45) are communicated with each other; wherein the third opening (35) has an opening direction the same as or different from the rotating direction, and the fourth opening (45) has an opening direction the same as or different from the rotating direction.

9. The rotary motor (U) according to claim 8, wherein a perpendicular projection of the first airflow-guiding structure (32) on the first cover body (31) partially overlaps with the first opening (33), and a perpendicular projection of the second airflow-guiding structure (42) on the second cover body (41) partially overlaps with the second opening (43).

10. A rotor assembly (RA), **characterized by** comprising:
a rotating shaft (1) having a central axis (A);
a rotor body (2) disposed on the rotating shaft (1), wherein the rotor body (2) has a main portion (21), a first end portion (22) connected to an end of the main portion (21), a second end portion (23) connected to another end of the main portion (21), and a plurality of airflow-guiding through holes (20) passing through the first end portion (22), the main portion (21) and the second end portion (23) along an axial direction of the rotor body (2);
a first end cover (3) disposed on the rotating shaft (1) and corresponding to the first end portion (22), wherein the first end cover (3) includes a first cover body (31), a plurality of first airflow-guiding structures (32) disposed on the first cover body (31), and a plurality of first openings (33) passing through the first cover body (31), and the first airflow-guiding structures (32) respectively correspond to the first openings (33); and
a second end cover (4) disposed on the rotating shaft (1) and corresponding to the second end portion (23), wherein the second end cover (4) includes a second cover body (41), a plurality of second airflow-guiding structures (42) disposed on the second cover body (41), and a plurality of second openings (43) passing through the second cover body (41), and the second airflow-guiding structures (42) respectively correspond to the second openings (43);
wherein the first openings (33) are respectively communicated with the second openings (43) by the airflow-guiding through holes (20) so as to form a plurality of gas channels.
